(19) Europäisches Patentamt
European Patent Office
Office européen des brevets

(11) **EP 3 124 342 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(51) Int Cl.:
*B60T 8/17* *(2006.01)*      *B60T 8/172* *(2006.01)*
*B60T 17/22* *(2006.01)*

(21) Anmeldenummer: **16181579.0**

(22) Anmeldetag: **28.07.2016**

(54) **VERFAHREN ZUR ANSTEUERUNG EINER ODER MEHRERER BREMSEN EINES FAHRZEUGS**

METHOD FOR CONTROLLING ONE OR MORE BRAKES OF A VEHICLE

PROCEDE DE COMMANDE D'UN OU PLUSIEURS FREINS D'UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 DE 102015112363**

(43) Veröffentlichungstag der Anmeldung:
**01.02.2017 Patentblatt 2017/05**

(73) Patentinhaber: **KNORR-BREMSE Systeme für Nutzfahrzeuge GmbH**
**80809 München (DE)**

(72) Erfinder:
• **MEDERER, Martin**
**92318 Neumarkt (DE)**
• **FRY, Matthew**
**North Somersec, BS48 1PP (GB)**

(56) Entgegenhaltungen:
**EP-B1- 0 590 388**      **WO-A1-2006/032657**
**DE-A1- 10 150 047**

**Beschreibung**

Die Erfindung betrifft ein Verfahren zur Ansteuerung einer oder mehrerer Bremsen, insbesondere Scheibenbremsen, eines Bremssystems für ein Fahrzeug, insbesondere für ein Anhängerfahrzeug.

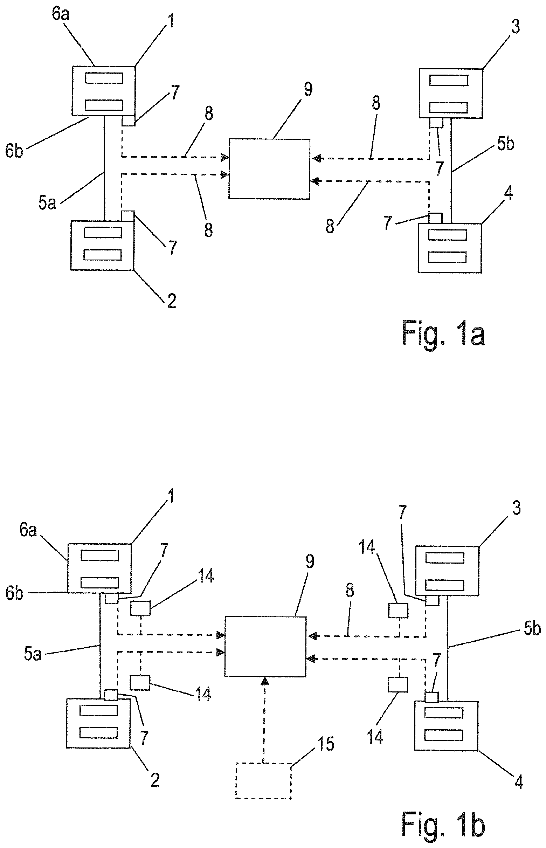

**Fig. 1** zeigt eine schematische Darstellung eines Fahrzeugbremssystems für ein Fahrzeug mit hier beispielhaft vier auf zwei Achsen 5a (Vorderachse, auch als VA bezeichnet), 5b (Hinterachse, auch HA) verteilten Scheibenbremsen 1, 2, 3, 4, die jeweils zwei Bremsbeläge 6a, 6b aufweisen. Das Fahrzeug ist vorzugsweise insbesondere ein Nutzfahrzeug. Bei dem Fahrzeug kann es sich ferner um ein angetriebenes Fahrzeug, insbesondere um ein Zugfahrzeug, handeln oder um ein Anhängerfahrzeug.

Die Bremsbeläge 6a, 6b werden bei Bremsungen jeweils gegen hier nicht dargestellte Bremsscheiben der Scheibenbremsen 1 - 4 gepresst, um das Fahrzeug abzubremsen. Infolge der Bremsungen verschleißen die Bremsbeläge 6a, 6b und die Bremsscheibe. Um den Verschleiß der Bremsbeläge 6a, 6b und der Bremsscheibe als Summensignal zu ermitteln, ist es bekannt, Verschleißsensoren 7 an den hier vier (oder mehr) Scheibenbremsen 1 - 4 jeweils über eine Verbindung wie Kabel 8 oder drahtlos an eine Auswertungs- und Steuerungseinrichtung 9 anzuschließen. Diese kann - bei dem Stand der Technik und auch bei der Erfindung - als Teil eines übergeordneten, hier nicht weiter dargestellten - Fahrzeugzustandsermittlungs- und -informationssystems des Fahrzeugs ausgelegt sein.

Nach dem in Fig.1 abgebildeten Stand der Technik ist vorgesehen, dass die vier Scheibenbremsen 1 - 4 jeweils einen der Belagverschleißsensoren 7 - nachfolgend auch Einzelsensor genannt - aufweisen, deren Ausgänge jeweils über eines der Kabel 8 an die Auswertungseinrichtung 9 angeschlossen sind, so dass an dieser im Betrieb des Fahrzeugs Informationen über den jeweiligen Verschleißzustand der Bremsbeläge 6a, 6b der Scheibenbremsen bereitstehen (siehe z.B. die EP 0 590 388 B1).

Aus der DE 101 50 047 A1 ist es ferner bekannt, die bei einer oder mehreren Bremsungen auftretende Energie zu ermitteln, einen Vergleich dieser Bremsenergie mit einem Bremsenergiegrenzwert durchzuführen und im Falle eines Überschreitens dieses Grenzwertes mit Elektromotoren an den ansonsten druckluftbetätigten Scheibenbremsen eine Nachstellbewegung zum Ausgleich des aufgetretenen Verschleißes durchzuführen. Nach einer Variante der DE 101 50 047 A1 wird die Bremsenergie ohne zusätzliche Sensoren direkt aus dem Bremsmoment und dem Raddrehwinkel errechnet. Bevorzugt wird dazu der Raddrehwinkel mittels eines ABS-Systems mit einem Polradsensor ermittelt, der bei modernen Bremssystemen stets vorhanden ist und von daher keinen apparativen Mehraufwand bedeutet. Ebenfalls bevorzugt wird das Bremsmoment auf einfache Weise aus dem Bremszylinderdruck, insbesondere eines pneumatisch betätigten Bremszylinders, ermittelt, welcher einem EBS- oder ABS-Steuerungsrechner bzw. einer Auswertungs- und Steuerungseinrichtung ebenfalls zugeleitet wird. Zweckmäßig - dies kann empirisch ermittelt werden - wird eine Nachstellung jeweils beim Überschreiten eines Energiegrenzwertes von 2 bis 8 MJ, insbesondere 5MJ eingeleitet, um einerseits die Häufigkeit der Nachstellvorgänge relativ gering zu halten und um andererseits stets eine genügende Bremssicherheit aufrecht zu erhalten.

Die Bremsenergie wird nach der DE 101 50 047 A1 - und dieses Verfahren ist auch erfindungsgemäß beispielhaft gut einsetzbar - näherungsweise aus dem Drehzahlsignal und dem Bremsdrucksignal ermittelt:

$$W_B = M_B \, \varphi_B,$$

wobei

$W_B$ := Bremsenergie;
$M_B$ := Bremsmoment;
$\varphi_B$ := Raddrehwinkel.

Der Raddrehwinkel wird vorzugsweise unmittelbar über einen z.B. für eine ABS- und/oder EBS-Funktion eines Bremssystems zur Bremsregelung sowieso benötigten und daher bereitstehenden Drehzahlsensor bestimmt. Der Drehzahlsensor besteht aus einem Polrad, welches mit der Radnabe umläuft und einem feststehenden Geber, der die vorbei bewegten Zähne, Magnetspulen usw. des Polrades mit einem Spannungsimpuls registriert. Bei z.B. 100 Zähnen pro Polrad entspricht somit ein Impuls einem Raddrehwinkel von 3,6°. Durch Aufsummieren dieser Impulse wird von der Auswertungseinrichtung der Raddrehwinkel während der Bremsphase ermittelt.

Das Bremsmoment wird vorzugsweise mittels des in einem ABS-/EBS-System vorhandenen Drucksensors mit der Auswertungseinrichtung durch Ermittlung des Bremszylinderdruckes nach folgender Formel berechnet:

$$M_B \quad = \quad (P_Z - P_{An}) \, A_Z \, i \, \varepsilon \, C^* \, r_{eff,}$$

wobei:

$P_Z$ = Druck im Bremszylinder und
$P_{An}$ = Anlegedruck der Bremse
$i$ = Kraftübersetzungsverhältnis der Bremse
$\varepsilon$ = mechanischer Wirkungsgrad des Kraftübersetzungsmechanismus der Bremse
$C^*$ = Bremsenkennwert $\approx$ 2 x $\mu_B$
$\mu_B$ = Reibungswert des Bremsbelages
$r_{eff}$ = wirksamer Reibradius der Bremsscheibe
$Z$ = Anzahl der aufsummierten Drehwinkelimpulse eines ABS-Polrades

$A_Z$ = wirksame Kolbenfläche des Bremszylinder.

Zudem kann die pro Drehung entsprechend einem Zahn eines ABS-Polrades, also die pro Drehzahlimpuls, umgesetzte Bremsenergie wie folgt ermittelt werden

$$W \quad = \quad (P_Z - P_{An})\, K$$

Wobei:

$K \quad = A_Z\, i\, \varepsilon\, C^*\, r_{eff}\, 2\pi/n;$
$P_Z \quad$ = Druck im Bremszylinder und
$P_{An} \quad$ = Anlegedruck der Bremse

Die umgesetzte Bremsenergie wird somit durch einfache Verknüpfungen des Bremszylinderdruck-Signales mit der Anzahl der Raddrehimpulse ermittelt.

Die angegebenen Formeln sind beispielhaft und müssen nicht zwingend für die Ermittlung der Bremsenergie verwendet werden. Sie eignen sich insbesondere für Scheibenbremsen mit elektromotorischer oder pneumatischer Betätigung sowie mit einem Schwimm-, Fest- oder Schiebesattel. Vorzugsweise umfasst das Nachstellsystem auf beiden Seiten der Bremsscheibe jeweils wenigstens eine der elektromotorischen Nachstelleinrichtungen.

In der vorstehend beschriebenen DE 101 50 047 A1 wird auch beschrieben, dass während der Fahrt zwischen Bremsungen mit den Nachstellmotoren ein leicht schleifendes Anlegen der Bremsbeläge an die Bremsscheibe erfolgt, um die Bremsbeläge und die Bremsscheibe - beispielsweise nach einem Geländeeinsatz - zu reinigen.

Aus der DE 199 33 961 A1 ist es auch bekannt, aus der Bremsenergie den Gesamtverschleiß von Bremsbelägen, aufsummiert über sämtliche Bremsungen seit einem Belagwechsel - zu ermitteln.

Bei Anhängerfahrzeugen wird der Bremszylinderdruck bei Bremsungen in der Regel aus einer Bremspedalinformation und einer Beladungsinformation ermittelt und eingestellt, um eine gewünschte Abbremsung zu erzielen. Die Abbremsung ist der Quotient aus der Bremskraft und der Gewichtskraft des Fahrzeugs.

Werden über eine oder mehrere Bremsungen hinweg nur relativ niedrige Bremsdrücke aufgebaut oder wird nur selten bzw. wenig gebremst, kann dies zu einer nachteilige Beeinflussung des Reibwertes der Bremsbeläge führen.

Vor diesem Hintergrund ist es die Aufgabe der Erfindung, ein einfaches Verfahren zu schaffen, mit dem nachteiligen Entwicklungen des Reibwertes der Bremsbeläge eines Fahrzeugbremssystems, insbesondere eines Anhängerfahrzeugbremssystems, frühzeitig entgegengesteuert werden kann.

Die Erfindung erreicht dieses Ziel durch den Gegenstand des Anspruchs 1.

Geschaffen wird ein Verfahren zur Ansteuerung einer oder mehrerer Bremsen, insbesondere Scheibenbremsen, eines Bremssystems eines Fahrzeugs, insbesondere eines Anhängerfahrzeugs, mit zumindest folgenden Schritten:

a) Bereitstellen des Fahrzeugs mit dem Bremssystem mit wenigstens einer oder mehreren Bremsen mit Bremsbelägen, die eine Belagträgerplatte und einen Reibbelag aufweisen, und wenigstens einer Auswertungs- und Steuerungseinrichtung;
b) Ermitteln der bei einer oder mehreren Bremsungen umgesetzten Bremsenergie je Bremse mit der Auswertungs- und Steuerungseinrichtung;
c) Vergleich der ermittelten Bremsenergie mit einem oder mehreren vorzugweise vorgegebenen Sollwerten mit der Auswertungs- und Steuerungseinrichtung; und
d) Erhöhung des Energieeintrags bei einer aktuellen und/oder einer oder mehreren folgenden Bremsungen mit der Auswertungs- und Steuerungseinrichtung, wenn die ermittelte Bremsenergie den Sollwert unterschreitet.

Vorteilhafte Ausgestaltungen dieses Verfahrens sind den Unteransprüchen zu entnehmen.

Wird ein zu geringer Energieeintrag über eine vorgegebene Einsatzzeit und/oder eine vorgegebene Kilometerlaufleistung, z.B. 20.000 km) detektiert (der Energiegrenzwert kann abhängig vom eingesetzten Bremsbelagmaterial parametriert werden) ist vorhersehbar, dass sich der Bremsbelagreibwert verschlechtern wird. Um dieser drohenden Verschlechterung entgegenzusteuern, wird definiert - beispielsweise im erlaubten Rahmen der ECE R13 - der Energieeintrag bei einer aktuellen Bremsung und/oder bei einer oder mehreren zukünftigen Bremsungen angehoben. Dies kann beispielsweise durch ein Aussteuern eines Bremszylinderdruckes erfolgen, der höher ist, als er an sich infolge aktueller bzw. jeweils zukünftiger Parameter - wie Charakteristik der Bremspedalbetätigung, Geschwindigkeit und ggf. Beladungszustand des Fahrzeugs - ohne eine Berücksichtigung der Bremsenergiebetrachtung eingestellt würde oder mindestens erforderlich wäre. Dies führt bei diesen Bremsungen zu einem höheren Energieeintrag und höheren Temperaturen an den Bremsbelägen. Nachteilige Veränderungen des Bremsbelagreibwertes können damit verringert oder sogar vollständig vermieden werden.

Bevorzugt werden als die eingesetzten Bremsen Scheibenbremsen, insbesondere druckluftbetätigte Scheibenbremsen verwendet. Die Erfindung ist aber prinzipiell auch für Trommelbremsen geeignet.

Der Energieeintrag kann beispielsweise - dies ist aber nicht zwingend - mit dem in der DE 101 50 047 A1 beschriebenen Verfahren ermittelt werden.

Vorzugsweise und einfach wird im Schritt d) der Energieeintrag bei der aktuellen Bremsung und/oder bei einer oder mehreren zukünftigen Bremsungen dadurch angehoben, dass ein Bremszylinderdruck eingestellt wird, der höher ist, als er an sich infolge aktueller bzw. zukünftiger Parameter wie einer Bremspedalbetätigung, einer Fahrzeuggeschwindigkeit und einem Beladungszustand des Fahrzeugs für die jeweilige Bremsung mindestens erforderlich wäre.

Dabei ist es zur Optimierung der Reibwerteigenschaften der Bremsbeläge vorteilhaft, wenn im Schritt d) der Energieeintrag bei der aktuellen Bremsung und/oder bei einer oder mehreren zukünftigen Bremsungen so angehoben wird, dass an den Bremsbelägen der Bremsen eine Temperatur von mindestens 150° C oder mehr erreicht wird.

Nachfolgend wird die Erfindung unter Bezug auf die Zeichnung anhand von Ausführungsbeispielen näher beschrieben. Es zeigen:

Fig.1a eine stark schematisierte und vereinfachte Darstellung eines ersten bekannten Fahrzeugbremssystems;

Fig.1b eine stark schematisierte und vereinfachte Darstellung eines weiteren Fahrzeugbremssystems;

Fig. 2 ein Diagramm, welches Bremsdruckverläufe an einem Anhängerfahrzeug veranschaulicht.

Fig. 1b zeigt ein Fahrzeugbremssystem für ein Fahrzeug, das beispielhaft vier auf zwei Achsen 5a, b verteilte Scheibenbremsen 1, 2, 3, 4, aufweist, die jeweils zwei Bremsbeläge 6a, 6b aufweisen. Diese Bremsbeläge sind bei Bremsungen reibend gegen eine hier nicht dargestellte Bremsscheibe zu drücken bzw. pressen. Das Fahrzeug kann insbesondere ein Zufahrzeug oder ein Anhängerfahrzeug sein. Die Scheibenbremsen werden zur Durchführung einer Bremsung vorzugsweise mittels ihnen zugeordneter Bremszylinder zugspannt. Vorzugsweise werden diese Bremszylinder zur Durchführung der Bremsung mit Druckluft beaufschlagt.

Wie nach dem Stand der Technik der Fig.1a kann vorgesehen sein, dass die vier Scheibenbremsen 1 bis 4 jeweils einen Verschleißsensor 7 aufwiesen, dessen Ausgang an die Auswertungseinrichtung 8 angeschlossen ist, so dass an diese im Betrieb des Fahrzeugs eine Information über den jeweiligen Verschleißzustand der Scheibenbremsen 1 bis 4 bereitsteht. Dies ist vorteilhaft, aber nicht unbedingt erforderlich.

Denn insbesondere wird mit dem erfindungsgemäßen Verfahren bei einem Bremssystem, beispielsweise nach Art der Fig. 1b, auch eine Energiebetrachtung durchgeführt. Es werden daher beispielsweise an der Auswertungseinrichtung 9 auch Signale über den Drehwinkel der Fahrzeugräder (Drehwinkelsensor 14 an den Rädern bzw. in der Nähe der Scheibenbremsen 1 - 4) und vorzugsweise über das Bremsmoment (Drucksensor 15) sowie vorzugsweise eine Information über die Laufdauer und/oder -strecke des Fahrzeuges bereitgestellt und ausgewertet. Die Ermittlung der Bremsenergie kann dabei auf verschiedene Weise erfolgen, so nach Art der eingangs beschriebenen DE 101 50 047 A1 oder der DE 199 33 961 A1. Die umgesetzte Bremsenergie entspricht im Wesentlichen dem Energieeintrag bei den Bremsungen.

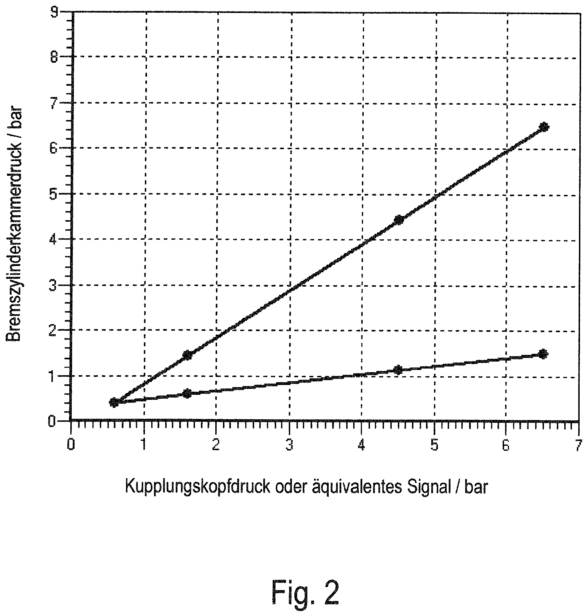

Fig. 2 veranschaulicht, dass an Anhängerfahrzeugen in den meisten Fällen eine "fest eingestellte" lastabhängige Bremsregelung für alle Achsen realisiert ist. "Fest eingestellt" bedeutet, dass abhängig vom Fahrerbremswunsch und abhängig vom aktuell gemessenen Beladungszustand (X-Achse) ein definierter und für diese jeweiligen Vorgaben fester bzw. unveränderbarer Bremszylinderdruck eingestellt wird. Der Drucksensor 15 liefert dann für en Bremswunsch ein konstantes Signal. Dynamische Änderungen an diesem Übertragungsverhältnis, abhängig von sich ändernden Zustandbzw. Eingangsgrößen sind in der Regel nicht möglich.

Wenn der Fahrer über die Stellung des Bremspedales eine bestimmte Verzögerung vorgibt (Fahrerwunsch), so muss das Bremsanforderungssignal in Abhängigkeit vom jeweiligen Fahrzustand, insbesondere der Masse des Fahrzeuges in ein entsprechendes Verzögerungssignal bzw. eine entsprechende Bremskraft umgewandelt werden. Der aktuelle Fahrzustand des Fahrzeuges ist durch eine Vielzahl von Variablen näherungsweise abbildbar, wie z. B. Fahrzeuggeschwindigkeit, Raddrehzahlen, Radschlüpfe, Fahrzeugmasse, Lenkwinkel, Fahrbahnneigung, momentane Getriebeübersetzung, Kühlsystemtemperatur, Batterieladezustand etc.

Der Bremszylinderdruck bei Bremsungen wird bei Anhängern vorzugsweise wie folgt von der Auswertungs- und Steuerungseinrichtung des Bremssystems berechnet:

Bremszylinderdruck = f [Fahrerwunsch (coupling head pressure), Beladungszustand].

Um eine negative Entwicklung der Reibwerte der Bremsbeläge infolge eines zu niedrigen Energieeintrags zu vermeiden, wird die nachfolgend beschriebene Verfahrensweise implementiert:

Bremsbeläge, bei denen sich im Laufe der Zeit der Reibwert aufgrund von zu wenigen Bremsungen oder von Bremsungen mit einem niedrigen Bremszylinderdruck, also durch zu geringen Energieeintrag, z.B. hervorgerufen durch häufigen Retardereinsatz, reduziert, erreichen nicht oder nicht genügend lange die notwendige Temperatur von beispielsweise mehr als 150° C, welche jedenfalls zeitweise erforderlich ist, um den jeweiligen Bremsbelagreibwert der Bremsbeläge im Bereich einer Normcharakteristik zu halten. Der Bremsbelagreibwert kann sich daher zunehmend verschlechtern.

Eine derartige nachteilige Entwicklung lässt sich frühzeitig vorhersagen und/oder erkennen.

Dazu wird der Energieeintrag in die Bremsbeläge bei Bremsungen mit der elektronischen Steuereinrichtung (z.B. Trailer-EBS) bzw. von deren Auswertungseinrichtung errechnet und aufkummuliert bzw. aufsummiert. Der Energieeintrag der Bremsbeläge ist beispielsweise von dem Bremszylinderdruck und von der Fahrzeuggeschwindigkeit (Radgeschwindigkeit) bzw. der bei der Bremsung zurückgelegten Fahrtstrecke abhängig).

Wird nun über den aufsummierten Energieeintrag ein relativ zu einem vorgespeicherten Grenzwert zu geringer Energieeintrag über die Einsatzzeit (und/oder die zurückgelegte Fahrtstrecke) detektiert (der Grenzwert kann abhängig vom eingesetzten Bremsbelagmaterial parametriert werden) ist vorhersehbar, dass sich der Bremsbelagreibwert verschlechtern wird.

Um dieser drohenden Verschlechterung entgegenzusteuern, wird definiert - beispielsweise im erlaubten Rahmen der ECE R13 - der Bremsdruck bzw. damit verbunden der Energieeintrag bei einer aktuellen Bremsung und/oder bei einer oder mehreren zukünftigen Bremsungen über den an sich zum Erreichen der gemäß Bremspedalbetätigung, der Geschwindigkeit und ggf. weiterer Parameter wie der Beladung erforderlichen Bremswirkung notwendigen Wert angehoben. Dies kann beispielsweise durch ein Aussteuern eines Bremszylinderdruckes erfolgen, der höher ist, als er an sich infolge der aktuellen Parameter für die Bremsung erforderlich wäre, also beispielsweise höher als der eigentlich nach Fig. 2 einzustellende Bremszylinder(kammer)druck. Der an sich erforderliche Bremszylinderdruck ist derjenige, der mit der Auswertungs- und Ansteuerungsvorrichtung angesichts der jeweils vorliegenden Parameter ohne eine Berücksichtigung der Bremsenergiebetrachtung eingestellt würde.

Der erhöhte Bremsdruck führt zu einem erhöhten Energieeintrag. Nachteilige Veränderungen des Bremsbelagreibwertes können damit verringert oder sogar vollständig vermieden werden.

Durch die zeitweise gesteuerte Bremzylinderdruckerhöhung und somit durch eine Temperaturanhebung des Bremsbelags wird sichergestellt, dass der Reibwert im Normbereich bleibt oder sogar in diesen zurückgeführt wird.

BEZUGSZEICHENLISTE

| 1 | Scheibenbremse |
|---|---|
| 2 | Scheibenbremse |
| 3 | Scheibenbremse |
| 4 | Scheibenbremse |
| 5a, b | Achsen |
| 6a, b | Bremsbelag |
| 7 | Verschleißsensoren |
| 8 | Kabel |
| 9 | Auswertungseinrichtung |
| 14 | Polradsensoren |
| 15 | Drucksensor |

Patentansprüche

1. Verfahren zur Ansteuerung einer oder mehrerer Bremsen, insbesondere Scheibenbremsen, eines Bremssystems eines Fahrzeugs, insbesondere eines Anhängerfahrzeugs, mit zumindest folgenden Schritten:

a) Bereitstellen des Fahrzeugs mit dem Bremssystem mit wenigstens einer oder mehreren Bremsen mit Bremsbelägen (6a, 6b), die eine Belagträgerplatte und einen Reibbelag aufweisen, und wenigstens einer Auswertungs- und Steuerungseinrichtung (9);
b) Ermitteln der bei einer oder mehreren Bremsungen umgesetzten Bremsenergie je Bremse mit der Auswertungs- und Steuerungseinrichtung (9);
c) Vergleich der ermittelten Bremsenergie mit wenigstens einem Sollwert mit der Auswertungs- und Steuerungseinrichtung (9); **dadurch gekennzeichnet, dass** das Verfahren zudem folgenden Schritt umfasst:
d) Erhöhung des Energieeintrags bei einer aktuellen und/oder einer oder mehreren folgenden Bremsungen mit der Auswertungs- und Steuerungseinrichtung (9), wenn die ermittelte Bremsenergie den Sollwert unterschreitet.

2. Verfahren nach Anspruch 1, **dadurch gekennzeichnet, dass** im Schritt b) ein Aufsummieren der mehreren Bremsungen umgesetzten Bremsenergie erfolgt und dass im Schritt c) ein Vergleich eines über die mehreren Bremsungen aufsummierten Bremsenergiewertes mit einem oder mehreren vorgegebenen Sollwerten erfolgt und dass im Schritt d) eine Erhöhung des Bremszylinderdruckes bei einer oder mehreren folgenden Bremsungen erfolgt, wenn die aufsummierte Bremsenergie den jeweiligen vorgegebenen Sollwert unterschreitet.

3. Verfahren nach Anspruch 1 oder 2, **dadurch gekennzeichnet, dass** im Schritt d) eine Steigung einer Kurve, insbesondere einer Geraden, ermittelt wird, welche die aufsummierte Bremsenergie als Funktion der Kilometerleistung wiedergibt und dass der Sollwert ein Steigungssollwert über ein vorgegebenes Laufleistungsintervall ist.

4. Verfahren nach einem der vorstehenden Ansprüche, **dadurch gekennzeichnet, dass** im Schritt d) zur Erhöhung des Energieeintrags ein Bremszylinderdruck an Bremszylindern der Bremsen angehoben wird.

5. Verfahren nach einem der vorstehenden Ansprüche, **dadurch gekennzeichnet, dass** im Schritt d) der Energieeintrag bei der aktuellen Bremsung und/oder bei einer oder mehreren zukünftigen Bremsungen dadurch angehoben wird, dass ein Bremszylinderdruck eingestellt wird, der höher ist, als er an sich infolge aktueller bzw. zukünftiger Parameter wie einer Bremspedalbetätigung, einer Fahrzeuggeschwindigkeit und einem Beladungszustand des Fahrzeugs für die jeweilige Bremsung erforderlich wäre.

**6.** Verfahren nach einem der vorstehenden Ansprüche, **dadurch gekennzeichnet, dass** im Schritt d) der Energieeintrag bei der aktuellen Bremsung und/oder bei der einen oder den mehreren zukünftigen Bremsungen so angehoben wird, dass an den Bremsbelägen der Bremsen eine Temperatur von mindestens 150° C oder mehr erreicht wird.

**7.** Verfahren nach einem der vorstehenden Ansprüche, **dadurch gekennzeichnet, dass** als die Bremsen Scheibenbremsen verwendet werden.

## Claims

**1.** A method for controlling one or more brakes, in particular disc brakes, of a brake system of a vehicle, in particular a trailer vehicle, comprising at least the following steps:

a) providing the vehicle having the brake system with at least one or more brakes with brake pads (6a, 6b) that have a pad carrier plate and a friction lining, and with at least one evaluation and control device (9);
b) determining the braking energy per brake converted during one or more brake applications by means of the evaluation and control device (9);
c) comparing the braking energy determined with at least one setpoint value by means of the evaluation and control device (9); **characterised in that** the method also comprises the following step:
d) increasing the energy input during a current and/or one or more subsequent brake applications by means of the evaluation and control device (9) when the braking energy determined falls below the setpoint value.

**2.** A method according to claim 1, **characterised in that** at step b) the braking energy converted during the plurality of brake applications is totalled and that at step c) a total braking energy value determined for the plurality of brake applications is compared with one or more predetermined setpoint values and that at step d) the brake cylinder pressure is increased during one or more subsequent brake applications if the total braking energy falls below the relevant predetermined setpoint value.

**3.** A method according to claim 1 or 2, **characterised in that** at step d) a gradient of a curve, in particular of a straight line, is determined that reflects the total braking energy as a function of the kilometrage and that the setpoint value is a gradient setpoint value over a predetermined kilometrage interval.

**4.** A method according to any one of the previous claims, **characterised in that** at step d) a brake cylinder pressure at brake cylinders of the brakes is raised in order to increase the energy input.

**5.** A method according to any one of the previous claims, **characterised in that** at step d) the energy input during the current brake application and/or during one or more future brake applications is increased by setting a brake cylinder pressure that is greater than is inherently necessary due to current or future parameters such as brake pedal actuation, vehicle speed and loading state of the vehicle for the relevant brake application.

**6.** A method according to any one of the previous claims, **characterised in that** at step d) the energy input during the current brake application and/or during one or more future brake applications is raised so as to achieve a temperature of at least 150°C or more at the brake pads of the brakes.

**7.** A method according to any one of the previous claims, **characterised in that** disc brakes are used as the brakes.

## Revendications

**1.** Procédé de commande d'un frein ou de plusieurs freins, en particulier de freins à disque, un système de frein d'un véhicule, en particulier d'un véhicule à remorque, comprenant au moins les stades suivants :

a) on se procure le véhicule comprenant le système de frein ayant au moins un frein ou plusieurs freins ayant des garnitures (6a, 6b) de frein, qui ont une plaque de support de garniture et une garniture de friction, et au moins un dispositif (9) d'exploitation et de commande ;
b) on détermine par le dispositif (9) d'exploitation et de commande pour chaque frein l'énergie de freinage transformée lors d'un freinage ou de plusieurs freinages ;
c) on compare l'énergie de freinage déterminée à au moins une valeur de consigne par le dispositif (9) d'exploitation et de commande,

**caractérisé en ce que** le procédé a en outre le stade suivant :

d) on augmente l'apport d'énergie lors d'un freinage en cours et/ou lors d'un freinage ou de plusieurs freinages suivant(s) par le dispositif (9) d'exploitation et de commande, si l'énergie de freinage déterminée est inférieure à la valeur de consigne.

2. Procédé suivant la revendication 1, **caractérisé en ce que** dans le stade d), on effectue une sommation de l'énergie de freinage transformée dans les plusieurs freinages et **en ce que**, dans le stade c), on effectue une comparaison d'une valeur d'énergie de freinage sommée sur les plusieurs freinages à une ou à plusieurs valeurs de consigne donnée(s) à l'avance et **en ce que**, dans le stade d), on effectue une augmentation de la pression du cylindre de frein pour l'un ou pour plusieurs des freinages suivants, si l'énergie de freinage sommée est inférieure à la valeur de consigne respective donnée à l'avance.

3. Procédé suivant la revendication 1 ou 2, **caractérisé en ce que**, dans le stade d), on détermine une pente d'une courbe, notamment d'une droite, qui reproduit l'énergie de freinage sommée en fonction du kilométrage et **en ce que** la valeur de consigne est une valeur de consigne de temps sur un intervalle de kilométrage parcouru donné à l'avance.

4. Procédé suivant l'une des revendications précédentes, **caractérisé en ce que**, dans le stade d), pour augmenter l'apport d'énergie, on élève la pression sur les cylindres de frein.

5. Procédé suivant l'une des revendications précédentes, **caractérisé en ce que**, dans le stade d) on augmente l'apport d'énergie lors du freinage en cours et/ou lors d'un ou de plusieurs freinage(s) à venir, en réglant une pression de cylindre de frein, qui est plus haute que cela ne serait nécessaire pour le freinage respectif en soi, en raison de paramètres en cours ou à venir, comme un actionnement de la pédale de frein, une vitesse du véhicule, et un état de charge du véhicule.

6. Procédé suivant l'une des revendications précédentes, **caractérisé en ce que**, dans le stade d), on augmente l'apport d'énergie dans le freinage en cours et/ou dans l'un ou dans les plusieurs freinage(s) à venir, de manière à atteindre une température d'au moins 150°C ou plus sur les garnitures des freins.

7. Procédé suivant l'une des revendications précédentes **caractérisé en ce qu'**on utilise des freins à disque comme freins.

Fig. 1a

Fig. 1b

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0590388 B1
- DE 10150047 A1
- DE 19933961 A1